# EUROPEAN PATENT APPLICATION

(11) **EP 0 814 036 A2**
(43) Date of publication of application: **29.12.1997**
(21) Application number: 97303446.5
(22) Date of filing: 21.05.1997
(51) Int. Cl.: B65G 17/46, B65G 47/22

(54) **Slat band conveyor**

(30) Priority: 23.05.1996 GB 9610873
(71) Applicant: Trillmoss Limited, London N5 2LL (GB)
(72) Inventor: Geen, Peter, Newport Pagnell, Bucks MK16 8PW (GB)
(74) Representative: Raynor, Simon Mark

(57) **Abstract**

A slat band conveyor for conveying goods comprises a track (1), a band (4) of linked slats (5) that is arranged for movement along said track (1), and a gripping mechanism (8) for gripping goods carried by the conveyor, said gripping mechanism (8) comprising a plurality of gripping members (8) mounted on said band (4) for movement therewith. An adjusting means (11,13,14) is provided for adjusting the gripping action of the gripping members (8) as the band (4) moves along the track (1).

## Description

The present invention relates to a slat band conveyor.

A slat band conveyor consists of a band of linked platelike slats that travel along a track. Each slat has a formation on its lower surface that engages a guide slot in the upper surface of the track. The slats form a substantially flat platform on which goods may be carried along the track. Rails may be provided on either side of the track to provide some support for the goods. The slats may also be provided with upstanding supports or resilient gripping fingers for supporting or gripping the goods.

Slat band conveyors are used, for example, in the bottling industry for moving bottles through a filling machine. With improved technology, the speed of these filling machines has increased and speeds in excess of 300 bottles per minute are not uncommon. This has led to problems with the conveyors, in particular because the bottles have a tendency to fall over owing to the increased velocities and accelerations.

It is an object of the present invention to provide a slat band conveyor that reduces the tendency of the bottles to fall over. It is a further object of the invention to provide improvements to slat band conveyors generally.

According to the present invention there is provided a slat band conveyor as defined by the accompanying claims.

The slat band conveyor preferably comprises a track, a band of linked slats that is arranged for movement along said track, a gripping mechanism for gripping goods carried by the conveyor, said gripping mechanism comprising a plurality of gripping members mounted on said band for movement therewith, and adjusting means for adjusting the gripping action of the gripping members as the band moves along the track.

The gripping members serve to hold goods such as bottles upright as they are transported along the track. Because the gripping action of the gripping members can be adjusted, they can be arranged to release the bottles at predetermined locations, for example where the bottles are placed on the track or removed from it. At other locations the bottles are gripped securely.

The adjusting means may comprise guide means provided on the track, said guide means being engaged by the gripping members so as to adjust the gripping action of the gripping members automatically as the goods move along the conveyor.

The guide means may comprise a slot formed in the surface of the track, said slot being engaged by engaging means associated with the gripping members.

The slat band conveyor may include a plurality of guide means, for example slots, for selectable engagement by the gripping members, so allowing the gripping members to accommodate goods of different sizes. The conveyor may include means for automatically selecting the engagement of the gripping members with the appropriate guide means.

Each gripping member may include one adjustable gripping element and one non-adjustable gripping element. Preferably, each gripping member includes two adjustable gripping elements.

Advantageously, each adjustable gripping element is adjustable in a direction substantially perpendicular to the direction of travel of the band.

Advantageously, a gripping member is associated with each slat.

The gripping members may be provided with resilient facings: for example the members may have rubber facings or they may be spring-loaded.

Although the present invention is particularly applicable to slat band conveyors that are intended for transporting bottles, it is also applicable to conveyors intended for transporting other goods.

The present invention further provides a slat band conveyor having means for automatically gripping and releasing goods transported on the conveyor.

An embodiment of the invention will now be described, by way of example, with reference to the accompanying drawings, of which:
FIGURE 1 is a perspective view of a section of the slat band conveyor;
FIGURE 2 is a cross-sectional view of the slat band conveyor, taken on line II-II of Figure 1;
FIGURE 3 is a plan view of a portion of the track for the slat band conveyor;
FIGURE 4 is a plan view of a typical slat band conveyor installation;
FIGURE 5 is a cross-sectional view of the slat band conveyor installation, taken on line IV-IV of Figure 4;
FIGURE 6 is a cross-sectional view of a gripping element on an enlarged scale;
FIGURE 7 is a plan view of a section of the slat band, on an enlarged scale;
FIGURE 8 is a plan view of a selector mechanism, on an enlarged scale, and
FIGURES 9, 10 and 11 are cross-sectional views of the slat band conveyor installation, illustrating how the conveyor accommodates bottles of different sizes.

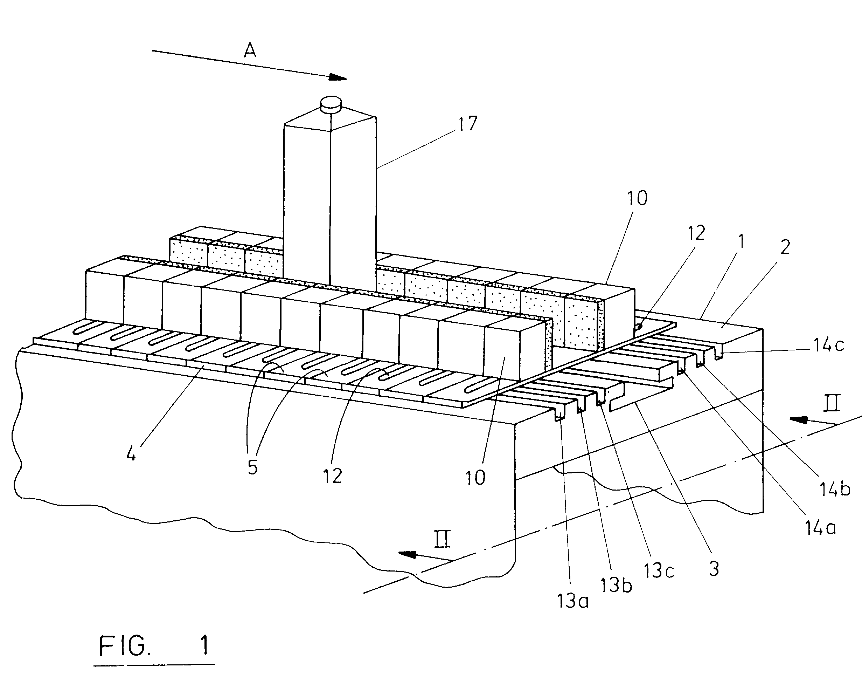

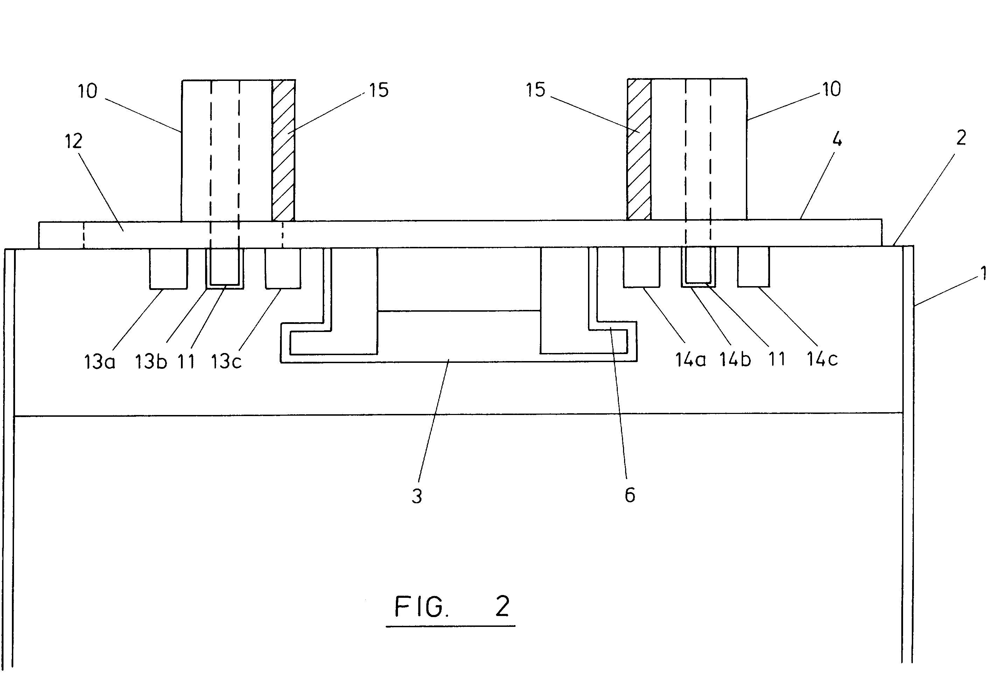

As shown in the Figs 1 to 3 of the drawings, the slat band conveyor includes a track 1 having an upper surface 2. A slat guide slot 3 in the form of an inverted T, is provided in the upper surface 2 of the track 1.

A band 4 comprising a plurality of slats 5 is arranged to move along the upper surface 2 of the track 1. Each slat 5 has on its lower surface a T-shaped formation 6 that engages the slat guide slot 3, so retaining and guiding the slats along the track 1. The slats 5 are connected to one another by a link mechanism (not shown) that allows for a degree of three-dimensional movement between the slats, so that the band 4 may negotiate both horizontal curves and twists in the track. The band 4 is engaged by a drive mechanism (not shown) that drives the band along the track 1. These features are all well known to those skilled in the art.

Provided on the upper surface of the band 4 is a gripping mechanism comprising a plurality gripping members 8, one such gripping members 8 being mounted on each of the slats 5. Each gripping member 8 comprises a pair of opposed gripping elements 10, which are provided at opposite ends of the slat 5. Depending from the lower surface of each gripping element 10 is a guide pin 11 that extends through a transverse slot 12 in the end region of the slat 5. The gripping elements 10 are thus mounted so as to slide relative to the slat 5 transversely to the direction of travel A of the band 4.

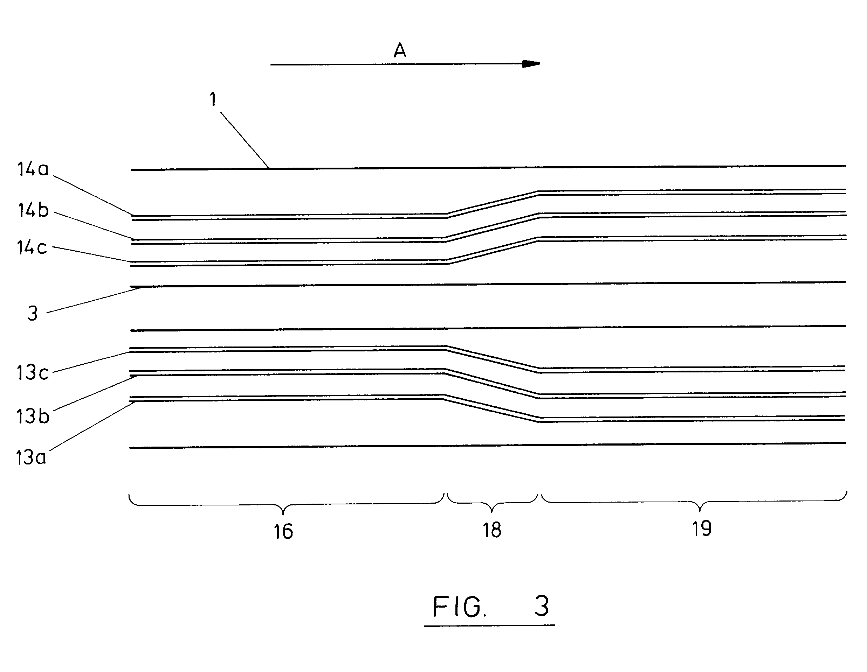

The lower ends of the pins 11 engage longitudinally extending slots 13b, 14b formed in the upper surface 2 of the track 1. The separation of the gripping elements 10 from one another is thus determined by the separation of the slots 13b, 14b. Alternative slots 13a, 13c, 14a, 14c are provided on either side of each of the slots 13b, 14b, which may be engaged by the gripping members 8 to accommodate goods of different sizes. As shown in Figure 3, the separation of the slots 13b, 14b varies in different regions of the track, and the separation of the gripping elements 10 therefore varies as the slats 5 move along the track.

The gripping elements 10 have on their inner surfaces resilient facings 15 made, for example, of neoprene. Alternatively, or in addition, the faces of the gripping elements 10 may be spring-loaded.

In operation, the band 4 of slats 5 is driven along the track 1 in the direction of arrow A by means of the drive mechanism (not shown). The band is guided by the T-shaped formations 6 on the lower surfaces of the slats 5, which engage the slat guide slot 3 provided in the upper surface 2 of the track 1.

The separation of each pair of gripping elements 10 is determined by the separation of the slots 13b, 14b in which the guide pins 11 are engaged. Where these slots are close together, as in the region indicated by the reference number 16 in Figure 3, the gripping members 8 will be close together, so allowing them to exert a gripping action on the goods (for example, bottle 17) being transported by the conveyor.

At locations where goods are to be removed from the conveyor, the slots 13b, 14b diverge from one another, as indicated by the reference number 18 in Figure 3, so that in region 19, where the separation of the slots 13b, 14b is greatest, the gripping elements 10 release the goods 17, allowing them to be removed. Similarly, at locations where goods 17 are to be placed on the conveyor, the separation of the gripping elements 10 will initially be large and they will subsequently move towards one another to grip the goods.

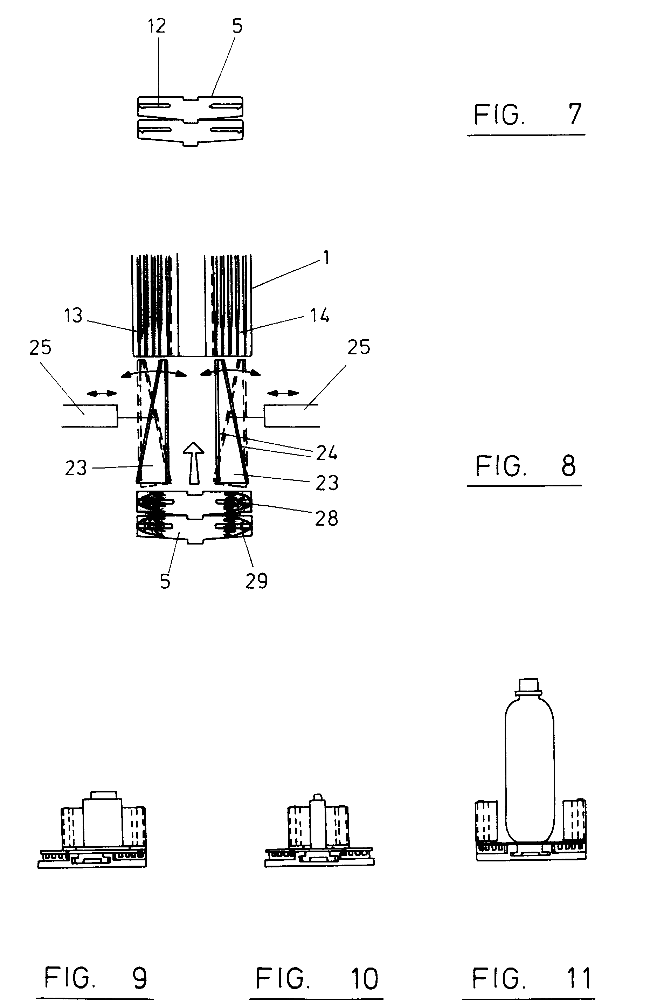

The alternative sets of slots 13a, 13c, 14a, 14c are provided so that the conveyor can accommodate bottles or other goods of different sizes. Any combination of slots may be selected to suit the dimensions of the goods. If necessary, an offset can be provided by selecting the appropriate slots (for example, slots 13a and 14b). A selector mechanism, shown in more detail in Fig. 8, may be provided for automatically selecting the appropriate guide slots, according to the dimensions of the goods and any offset requirements.

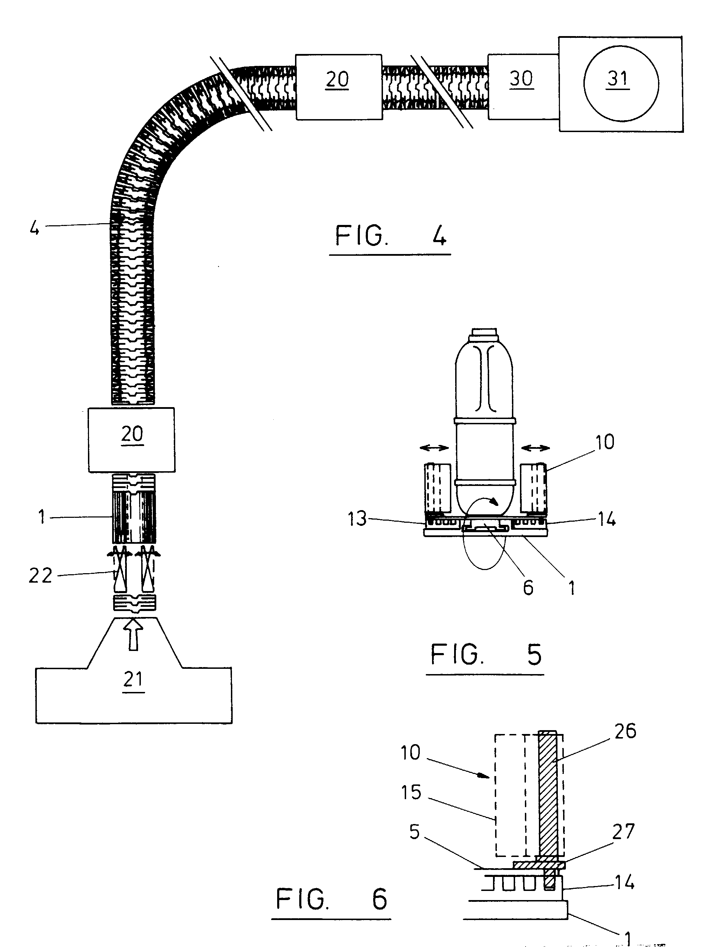

A typical slat conveyor installation will now be described with reference to Figs. 4 to 11. The conveyor may, for example, be part of a bottle filling installation.

The conveyor includes a track 1, for example of an ultrahigh wear polymer (UHMWPE) and a band 4 of linked slats 5, for example of acetal. The conveyor may include inclined elevator and lowerator sections 20.

At the upstream end of the conveyor there is provided an in-feed system 21 for introducing goods such as plastics bottles onto the conveyor. The in-feed system 21 may, for example, be a de-bagging table, an automatic de-palletisation machine or the out-feed of a blow moulder.

Immediately downstream of the in-feed system 21 there is provided a size selecting and gating mechanism 22, which is shown in more detail in Fig. 8. The mechanism 22 includes a pair of pivotable selector plates 23, each of which has a pair of converging walls 24 that engage the guide pins 11 depending from the lower surfaces of the gripping elements 10, to guide the pins into the appropriate slots 13,14. Actuators 25 are provided for automatically adjusting the positions of the slot selector plates 23.

The gripping elements 10, which are shown in more detail in Figs. 6 and 8, include an upright cylindrical rod 26 at the lower end of which there is provided a foot plate 27 that stands on the upper surface of the slat 5. The guide pins 11 depend from the lower surfaces of the foot plates 27 and extend through the slots 12 in the ends of the slats 5. The guide pins 11 engage guide means 13,14, mounted on either side of the track and each including a plurality of guide slots in its upper surface. Moulded rubber grippers 28 having inwardly extending flaps 29 are mounted on the cylindrical rods 26 of the gripping members 10.

At the downstream end of the conveyor, the bottles are delivered via an in-feed scroll or neck ring transfer device 30 to a filler machine 31.

The ability of the conveyor to accommodate bottles of different sizes, and to provide an offset, is illustrated in Figs. 9 to 11. Fig. 9 shows how an offset may be provide by engaging the guide pins in an inner slot on one side of the track and an outer slot on the other side of the track. Fig. 10 illustrates how a small bottle may be accommodated by engaging the guide pins 11 in the two innermost slots and Fig. 11 illustrates how a large bottle may be accommodated by engaging the guide pins in the two outermost slots.

Various modifications of the invention are possible. For example, instead of having two sets of movable gripping elements, one of the gripping elements on each slat may be fixed and the other gripping element may be movable. This mechanism would therefore be simpler than that shown in the drawings. The number of guide slots and their relative separations may also be varied. The guide slots, 13a, 13b, 13c, 14a, 14b, 14c may also be replaced by other forms of guide means, such as rails provided on or above the upper surface of the track 1.

## Claims

1. A slat band conveyor for conveying goods, the conveyor comprising a track (1), a band (4) of linked slats (5) that is arranged for movement along said track (1), and a gripping mechanism (8) for gripping goods carried by the conveyor, said gripping mechanism (8) comprising a plurality of gripping members (8) mounted on said band (4) for movement therewith; characterised by adjusting means (11,13,14) for adjusting the gripping action of the gripping members (8) as the band (4) moves along the track (1).

2. A slat band conveyor according to claim 1, characterised by said adjusting means (11,13,14) comprising guide means (13,14) provided on said track (1) and engaging means (11) associated with said gripping members (8) and engaging said guide means (13,14).

3. A slat band conveyor according to claim 2, characterised by said guide means (13,14) comprising at least one slot (13a,b,c, 14a,b,c) associated with said track (1).

4. A slat band conveyor according to claim 2 or claim 3, characterised by said adjusting means (11,13,14) comprising a plurality of guide means (13a,b,c, 14a,b,c) for selectable engagement by said engaging means (11).

5. A slat band conveyor according to claim 4, characterised by selector means (22) for selecting the engagement of said engaging means (11) with said plurality of guide means (13a,b,c, 14a,b,c).

6. A slat band conveyor according to any one of the preceding claims, characterised in that each gripping member (8) includes at least one adjustable gripping element (10).

7. A slat band conveyor according to claim 6, characterised in that each gripping member (8) includes at least two adjustable gripping elements (10).

8. A slat band conveyor according to claim 6 or claim 7, characterised in that each adjustable gripping element (10) is adjustable in a direction substantially perpendicular to the direction of travel of the band (4).

9. A slat band conveyor according to any one of the preceding claims, characterised in that a gripping member (8) is associated with each slat.

10. A slat band conveyor according to any one of the preceding claims, characterised in that the gripping members (8) are provided with resilient facings.
